# FASCICULE DE BREVET EUROPEEN

(11) **EP 3 787 956 B1**
(45) Date de publication et mention de la délivrance du brevet: **16.11.2022**
(21) Numéro de dépôt: 19721001.6
(22) Date de dépôt: 09.04.2019
(51) Int. Cl.: B62D 21/15, B62D 25/02

(54) **STRUCTURE DE VEHICULE AVEC LONGERON RENFORCE**
FAHRZEUGAUFBAU MIT VERSTÄRKTER SEITENSCHIENE
VEHICLE STRUCTURE WITH REINFORCED SIDE RAIL

(30) Priorité: 03.05.2018 FR 1853807
(43) Date de publication de la demande: 10.03.2021
(73) Titulaire: PSA Automobiles SA, 78300 Poissy (FR)
(72) Inventeur: BENANE, Said, 94240 L HAY LES ROSES (FR)
(86) Numéro de dépôt international: PCT/FR2019/050830
(87) Numéro de publication internationale: WO 2019/211538

(56) Documents cités:
- EP-A1- 2 412 612
- DE-A1-102004 044 037
- DE-A1-102016 109 609
- DE-B3-102015 012 100

## Description

L'invention concerne la déformation d'un véhicule automobile en cas de choc sur une roue arrière. Elle a notamment trait à la structure de la carrosserie d'un véhicule automobile, et plus particulièrement aux longerons de bas de caisse qui sont positionnés à l'avant de la roue arrière.

Les carrosseries des véhicules automobiles légers comportent généralement en arrière des portes arrières, un montant formant un corps creux sensiblement vertical, appelé pied arrière, qui supporte les serrures de ces portes. Le pied arrière est fixé rigidement à plusieurs éléments tubulaires de la structure de la carrosserie. En particulier, le pied arrière est relié en partie basse à un longeron latéral de bas de caisse et à une traverse de plancher, et en partie supérieure, à une traverse arrière de pavillon de toit. Le pied arrière se prolonge vers l'arrière par une tôle située à l'intérieur de l'aile, appelée doublure d'aile, et qui constitue un passage de roue. Cette doublure d'aile arrière est elle-même renforcée par un brancard arrière qui supporte à son extrémité le pare-chocs. Lors d'un choc arrière la partie arrière du véhicule doit absorber un maximum d'énergie. Ce type de choc entraîne en principe une déformation basse de cette partie arrière, comprenant un effort sur la roue arrière qui avance et prend alors appui sur la base du pied arrière et sur l'arrière du longeron de bas de caisse. Suivant l'intensité du choc arrière, la doublure d'aile se déforme aussi, et répercute alors la poussée sur la partie haute du pied arrière.

Pour renforcer la partie basse des longerons de bas de caisse vis-à-vis des chocs arrière il est connu de rajouter des éléments de type renfort et/ou amortisseurs sur les longerons. Or la tendance actuelle, qui vise à la réduction de la consommation en carburant, pousse également les constructeurs à limiter le poids des véhicules automobiles et donc à limiter le nombre et l'encombrement des renforts tout en améliorant la résistance aux chocs des longerons.

Le document DE2004044037 décrit un élément de compensation disposé entre un passage de roue intérieur 14 et un longeron arrière.

Le document brevet FR 3 027 274 A1 publié divulgue une structure de véhicule automobile avec deux longerons de bas de caisse chacun formé par un profilé extérieur et un profilé intérieur, qui ont une section en U et forment un corps creux. Ce dernier comprend respectivement à son extrémité arrière et à son extrémité avant, un renfort arrière et/ou un renfort de montant avant, et dans sa partie centrale un raidisseur et des cloisons. Le raidisseur a la forme d'un profilé en U avec des pattes de fixation montées sur la face intérieure latérale du profilé extérieur situé du côté extérieur au plancher. Les cloisons sont quant à elles positionnées transversalement entre le raidisseur et la face intérieure latérale du profilé intérieur du longeron concerné. Cet enseignement est intéressant en ce qu'en cas de choc arrière sur la roue arrière, le raidisseur et les cloisons renforcent l'action du renfort arrière en absorbant et transmettant l'énergie du choc. Toutefois bien que le raidisseur et les cloisons soient à l'intérieur du longeron, il n'en reste pas moins qu'ils sont uniquement répartis entre les deux traverses de plancher. De ce fait, les efforts d'un choc arrière, d'intensité moyenne, sur une roue arrière ne sont pas transmis de façon continue, et donc non optimale, sur le longeron.

L'invention a pour objectif de pallier au moins un des inconvénients de l'état de la technique susmentionné. Plus particulièrement, l'invention a pour objectif de proposer une structure de véhicule apte à absorber l'énergie d'un choc, notamment d'un choc arrière sur une roue arrière en transmettant les efforts de ladite roue sur le longeron de bas de caisse de façon continue et progressive, et cela de manière simple et n'entraînant pas une augmentation substantielle de la structure du véhicule automobile.

L'invention a pour objet une structure de véhicule automobile avec deux longerons latéraux de bas de caisse, chacun desdits longerons comprenant un profilé intérieur, et un profilé extérieur, avec une section en U, s'étendant depuis un pied milieu vers un pied arrière et fixé au profilé intérieur ; remarquable en ce que la structure comprend, en outre, pour chacun des deux longerons : un profilé de transmission d'effort depuis la roue arrière correspondante en cas de choc arrière, ledit profilé étant disposé au niveau du pied arrière dans le prolongement du profil extérieur et configuré pour, en cas de choc arrière, rentrer dans la section en U du profilé extérieur.

Selon un mode avantageux de l'invention, le profilé de transmission d'effort présente une section en U avec une largeur moyenne qui augmente progressivement de l'avant vers l'arrière. La largeur de la section en U est orientée verticalement. L'augmentation progressive de la largeur de la section en U le long du profilé de transmission d'effort est avantageusement supérieure à 30% et/ou inférieure à 90%, plus avantageusement supérieure à 50% et/ou inférieure à 70%. La section en U présente une profondeur qui est avantageusement essentiellement constante sur l'étendue du profilé de transmission d'effort.

Selon un mode avantageux de l'invention, le profilé de transmission d'effort présente en vis-à-vis du profilé extérieur une section en U de largeur moyenne inférieure à la largeur moyenne de la section en U dudit profilé.

Selon un mode avantageux de l'invention, le profilé de transmission d'effort présente des ajours aptes à favoriser une déformation du profilé lors du choc arrière et ainsi absorber une partie dudit choc. Chacun des ajours peut présenter une surface supérieure à 150mm², préférentiellement 200mm², plus préférentiellement 300mm². Les ajours sont avantageusement circulaires.

Selon un mode avantageux de l'invention, le profilé de transmission d'effort présente une extrémité arrière en vis-à-vis d'une joue avant de passage de la roue arrière correspondante, ledit profilé présentant à ladite extrémité un bossage sur l'âme de la section en U, augmentant localement la profondeur de ladite section.

Selon un mode avantageux de l'invention, la structure comprend, en outre, pour chacun des deux longerons, une pièce déformable en cas de choc arrière logée dans le profilé extérieur directement en vis-à-vis du profilé de transmission d'effort.

Selon un mode avantageux de l'invention, chacune des pièces déformables présente une forme en U avec une âme orientée longitudinalement et deux ailes orientées transversalement.

Selon un mode avantageux de l'invention, la structure comprend, en outre, pour chacun des deux longerons, un rail interne disposé dans la section en U du profilé extérieur de manière à pouvoir reprendre au moins une partie des efforts transmis par le profilé de transmission d'effort correspondant, en cas de choc arrière.

Selon un mode avantageux de l'invention, chacun des rails internes présente une section en U avec des pattes fixées à la face intérieure de l'âme de la section en U du profilé extérieur.

Selon un mode avantageux de l'invention, chacune des pièces déformables est disposée entre le rail interne et le profilé de transmission d'effort correspondants.

Les mesures de l'invention sont intéressantes en ce qu'elles permettent de transmettre à la suite d'un choc arrière sur une roue arrière, les efforts subis sur la roue, le long du longeron de bas de caisse concerné, et de limiter ainsi la déformation de la structure du véhicule automobile. Le profilé de transmission d'effort a un rôle de renfort du longeron mais également d'amortisseur ou absorbeur de choc grâce à sa configuration et à son agencement avec une pièce déformable et un rail interne, fixés sur la face intérieure du profilé extérieur dudit longeron. Cette invention est d'autant plus intéressante que la transmission et l'absorption des efforts de la roue arrière sur le longeron se fait de façon séquentielle mais continue permettant une meilleure atténuation de ceux-ci.

D'autres caractéristiques et avantages de la présente invention seront mieux compris à l'aide de la description et des dessins parmi lesquels :
- La figure 1 est une vue partielle et en perspective du bas de caisse d'une structure de véhicule automobile montrant un longeron latéral et un profilé de transmission d'effort selon l'invention;
- La figure 2 montre une vue en perspective et rapprochée du profilé de transmission d'effort du longeron de bas de caisse de la figure 1 ;
- La figure 3 illustre une vue en perspective du profilé de transmission d'effort de la figure 2 fixé à une pièce déformable en cas de choc arrière ;
- La figure 4 est une vue en perspective du profilé de transmission d'effort de la figure 2 associé à une pièce déformable qui est adjacente à un rail interne ;
- La figure 5, 6 et 7 sont des vues d'ensemble et de perspective du profilé de transmission d'effort avec la pièce déformable et le rail interne, montés sur le profilé extérieur du longeron de la figure 1 ;

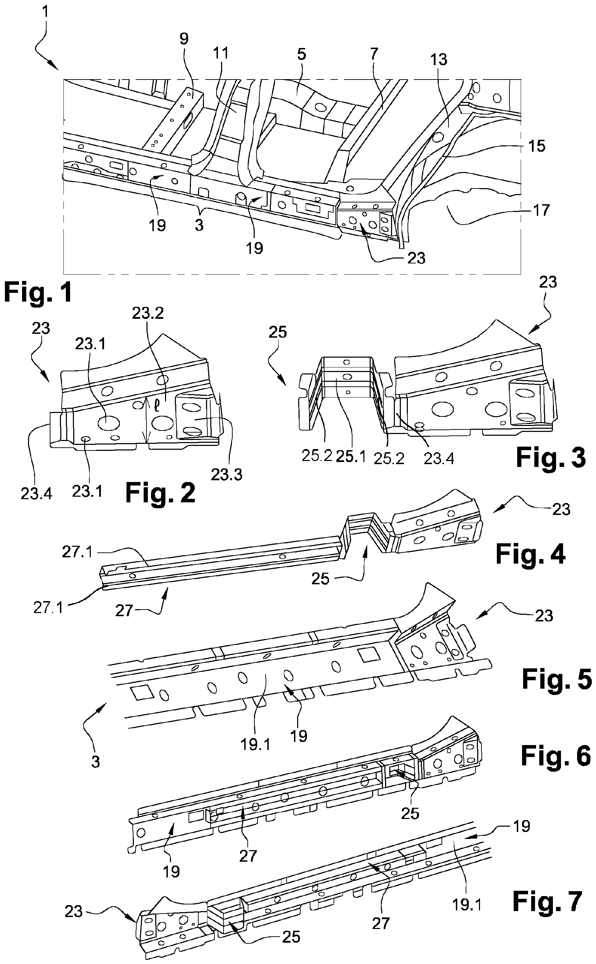

La figure 1 est une vue partielle et en perspective du bas de caisse d'une structure 1 de véhicule automobile montrant un longeron latéral 3 et un profilé de transmission d'effort selon l'invention. En l'occurrence, le longeron 3 est celui du côté gauche du véhicule, il est relié au tunnel central 5 du plancher via une traverse arrière 7 et une traverse milieu 9, et au reste de la structure 1 de la carrosserie par un pied milieu 11 et un pied arrière 13, lequel pied arrière 13 délimite avec l'aile arrière 15 la joue de passage 17 de la roue arrière (non représentée). Ce longeron 3 de bas de caisse est formé classiquement par deux profilés, un profilé extérieur 19 positionné du côté extérieur au plancher, et un profilé intérieur orienté du côté du plancher en face du profilé extérieur 19 et en l'occurrence non visible la figure 1. Les deux profilés présentent chacun une section généralement en U qui s'étend du pied arrière 13 vers le pied milieu 11 et qui sont reliées entre elles au niveau de jonction de feuillures (non visibles) pour former un corps creux (non visible).

La portion arrière du profilé extérieur 19 du longeron 3 de bas de caisse de la figure 1 se prolonge à son extrémité par un profilé de transmission d'effort 23 disposé au niveau du pied arrière 13 et configuré pour, en cas de choc arrière, rentrer dans la section en U du profilé extérieur 19. Ce profilé de transmission d'effort 23 est lui-même disposé de façon adjacente à une pièce déformable en cas de choc, qui est elle-même placée en continuité avec un rail interne. Du fait que ces deux derniers éléments sont fixés sur la section en U du profilé extérieur 19 et s'étendent dans le corps creux, seul le profilé de transmission d'effort 23 est donc clairement observable sur la figure 1.

La figure 2 montre une vue en perspective et rapprochée du profilé de transmission d'effort 23 du longeron 3 de bas de caisse de la figure 1. Ce profilé 23 présente une section en U dont la largeur moyenne ℓ augmente progressivement de l'avant vers l'arrière. La notion de largeur moyenne ici est à comprendre dans le sens que la forme du profilé de transmission d'effort 23 est non parfaitement rectangulaire et présente donc une largeur variable suivant la position, dans cette forme, où elle est mesurée. En l'occurrence sur la figure 1, le profilé de transmission d'effort 23 présente en vis-à-vis du profilé extérieur 19 du longeron 3, une section en U de largeur moyenne inférieure à la largeur moyenne ℓ du reste de la section, notamment de l'extrémité arrière positionnée en regard de la joue de passage 17 de la roue arrière.

Le profilé de transmission d'effort 23 représenté sur la figure 2, est une pièce métallique qui comprend également des ajours 23.1 avantageusement de différentes tailles. Lors d'un choc arrière sur une roue, ces ajours 23.1 sont à même de favoriser une déformation du profilé 23 et d'absorber ainsi une partie du choc.

Afin de consolider le profilé de transmission d'effort 23 mais également de le relier directement à la pièce déformable et indirectement au rail interne (non représentés sur la figure 2), l'âme 23.2 de la section en U de ce profilé 23 comprend avantageusement à son extrémité la plus large un bossage 23.3 qui augmente la profondeur de ladite section, et à son extrémité la plus étroite des bords de fixation 23.4 destinés à être fixés sur la pièce déformable (non représentée sur la figure 2).

La figure 3 illustre une vue en perspective du profilé de transmission d'effort 23 de la figure 2 fixée à la pièce déformable 25 en cas de choc arrière. Avantageusement, cette pièce déformable 25 présente une forme en U qui est logée dans le profilé extérieur 19 (non représenté sur la figure 3) du longeron 3 directement en vis-à-vis du profilé de transmission d'effort 23. L'âme 25.1 de cette pièce 25 en U est en particulier orientée longitudinalement dans le corps creux (non visible sur la figure 3) du longeron 3 et comprend deux ailes 25.2 qui sont dirigées transversalement. En l'occurrence sur la figure 3, une aile 25.2 de l'âme 25.1 de la pièce déformable 25 est montée sur un bord de fixation 23.4 du profilé de transmission d'effort 23 et l'autre est libre.

En cas de choc arrière sur une roue arrière, la pièce déformable 25 du fait de sa configuration et de sa disposition, se déforme par compression et ainsi amorti les efforts transmis sur cette roue.

La figure 4 montre une vue en perspective du profilé de transmission d'effort 23 de la figure 2 associé à la pièce déformable 25 qui est adjacente au rail interne 27. Ce rail 27 est en fait disposé dans la section en U du profilé extérieur 19 (non représenté sur la figure 4, voir la figure 6) du longeron 3. Il présente notamment une section en U avec des pattes 27.1 qui sont fixées à la face intérieure de l'âme 19.1 de la section en U du profilé extérieur 19.

L'agencement du rail 27 dans la section en U du profilé extérieur 19 du longeron 3 ainsi que sa proximité avec la pièce déformable 25 lui permet en cas de choc arrière, de reprendre au moins une partie des efforts transmis par le profilé de transmission d'effort 23 à la pièce déformable 25, et ainsi de brider cette dernière, mais également d'assurer une raideur de compression qui limite la déformation du longeron 3.

Les figures 5, 6 et 7 sont des vues d'ensemble et de perspective du profilé de transmission d'effort 23 avec la pièce déformable 25 et le rail interne 27, montés sur le profilé extérieur 19 du longeron 3 de la figure 1.

La figure 5 montre en particulier la face extérieure de l'âme 19.1 du profilé extérieur 19 de ce longeron 3. La pièce déformable 25 en forme de U et le rail interne 27 étant fixés sur la face intérieure du profilé extérieur 19, ils ne sont donc pas visibles sur cette figure.

La figure 6 est une vue de face similaire à la figure 5 mais dans ce cas le profilé extérieur 19 est représenté en transparence ce qui permet en l'occurrence de visualiser clairement la pièce déformable 25 et le rail interne 27.

La figure 7 est une vue identique à la figure 5 mais du côté de la face intérieure de l'âme 19.1 du profilé extérieur 19 du longeron 3. Elle montre distinctement la section en U du profilé de transmission d'effort 23 et celle du profilé extérieur 19 du longeron 3 auquel le profilé de transmission d'effort 23 est assemblé, mais également la section en U de la pièce déformable 25 et celle du rail interne 27.

De manière générale, cette invention a pour avantage de renforcer le longeron de bas de caisse en cas de choc arrière sur une roue arrière. L'association du profilé de transmission d'effort sur le profilé extérieur et en interaction avec une pièce déformable et un rail interne fixés sur la face intérieure du même profilé extérieur, permet une transmission et une absorption efficaces des efforts de la roue sur pied arrière.

Il est bien sur évident que ce qui vient d'être décrit pour le longeron gauche est valable pour le longeron droit d'un véhicule automobile.

## Revendications

1. Structure (1) de véhicule automobile avec deux longerons (3) latéraux de bas de caisse, chacun desdits longerons (3) comprenant :
- un profilé intérieur ; et
- un profilé extérieur (19), avec une section en U, s'étendant depuis un pied milieu (11) vers un pied arrière (13) et fixé au profilé intérieur (21);
**caractérisée en ce que** la structure (1) comprend, en outre, pour chacun des deux longerons (3):
- un profilé de transmission d'effort (23) depuis la roue arrière correspondante en cas de choc arrière, ledit profilé (23) étant disposé au niveau du pied arrière (13) dans le prolongement du profil extérieur (19) et configuré pour, en cas de choc arrière, rentrer dans la section en U du profilé extérieur (19).

2. Structure (1) selon la revendication 1, **caractérisée en ce que** le profilé de transmission d'effort (23) présente une section en U avec une largeur moyenne (f) qui augmente progressivement de l'avant vers l'arrière.

3. Structure (1) selon l'une des revendications 1 et 2, **caractérisée en ce que** le profilé de transmission d'effort (23) présente en vis-à-vis du profilé extérieur (19) une section en U de largeur moyenne inférieure à la largeur moyenne (f) de la section en U dudit profilé (23).

4. Structure (1) selon l'une des revendications 1 à 3, **caractérisée en ce que** le profilé de transmission d'effort (23) présente des ajours (23.1) aptes à favoriser une déformation du profilé (23) lors du choc arrière et ainsi absorber une partie dudit choc.

5. Structure (1) selon l'une des revendications 1 à 4, **caractérisée en ce que** le profilé de transmission d'effort (23) présente une extrémité arrière en vis-à-vis d'une joue avant de passage (17) de la roue arrière correspondante, ledit profilé (23) présentant à ladite extrémité un bossage (23.3) sur l'âme (23.2) de la section en U, augmentant la profondeur de ladite section.

6. Structure (1) selon l'une des revendications 1 à 5, **caractérisée en ce que** ladite structure (1) comprend, en outre, pour chacun des deux longerons (3), une pièce déformable (25) en cas de choc arrière logée dans le profilé extérieur (19) directement en vis-à-vis du profilé de transmission d'effort (23).

7. Structure (1) selon la revendication 6, **caractérisé en ce que** chacune des pièces déformables (25) présente une forme en U avec une âme (25.1) orientée longitudinalement et deux ailes (25.2) orientées transversalement.

8. Structure (1) selon l'une des revendications 1 à 7, **caractérisée en ce que** ladite structure (1) comprend, en outre, pour chacun des deux longerons (3), un rail interne (27) disposé dans la section en U du profilé extérieur (19) de manière à pouvoir reprendre au moins une partie des efforts transmis par le profilé de transmission d'effort (23) correspondant, en cas de choc arrière.

9. Structure (1) selon la revendication 8, **caractérisé en ce que** chacun des rails (27) internes présente une section en U avec des pattes (27.1) fixées à la face intérieure de l'âme (19.1) de la section en U du profilé extérieur (19).

10. Structure (1) selon l'une des revendications 6 et 7, et selon l'une des revendications 8 et 9, **caractérisée en ce que** chacune des pièces déformables (25) est disposée entre le rail interne (27) et le profilé de transmission d'effort correspondants (23).

## Patentansprüche

1. Kraftfahrzeugstruktur (1) mit zwei seitlichen Längsträgern (3) am unteren Ende des Fahrzeugaufbaus, wobei jeder der Längsträger (3) umfaßt:
- ein Innenprofil und
- ein Außenprofil (19) mit U-förmigem Querschnitt, daß sich von einem Mittelfuß (11) zu einem Hinterfuß (13) erstreckt und am Innenprofil (21) befestigt ist;
**dadurch gekennzeichnet, dass** die Struktur (1) außerdem für jeden der beiden Längsträger (3) umfasst:
- ein Kraftübertragungsprofil (23) von dem entsprechenden Hinterrad bei einem Heckaufprall, wobei das Profil (23) am Heckfuß (13) in Verlängerung des Außenprofils (19) angeordnet und ausgebildet ist, bei einem Heckaufprall in den U-förmigen Querschnitt des Außenprofils (19) einzugreifen.

2. Struktur (1) nach Anspruch 1, **dadurch gekennzeichnet, dass** das Kraftübertragungsprofil (23) einen U-förmigen Querschnitt mit einer mittleren Breite (f) aufweist, die von vorne nach hinten allmählich zunimmt.

3. Struktur (1) nach einem der Ansprüche 1 und 2, **dadurch gekennzeichnet, dass** das Kraftübertragungsprofil (23) gegenüber dem Außenprofil (19) einen U-förmigen Querschnitt mit einer mittleren Breite aufweist, die geringer ist als die mittlere Breite (f) des U-förmigen Querschnitts des Profils (23).

4. Struktur (1) nach einem der Ansprüche 1 bis 3, **dadurch gekennzeichnet, dass** das Kraftübertragungsprofil (23) Durchbrüche (23.1) aufweist, die geeignet sind, eine Verformung des Profils (23) beim hinteren Aufprall zu fördern und so einen Teil des Aufpralls zu absorbieren.

5. Struktur (1) nach einem der Ansprüche 1 bis 4, **dadurch gekennzeichnet, dass** das Kraftübertragungsprofil (23) ein hinteres Ende aufweist, das einer Vorderwand (17) des Durchgangs des entsprechenden Hinterrades gegenüberliegt, wobei das Profil (23) an diesem Ende einen Vorsprung (23.3) auf dem Steg (23.2) des U-förmigen Querschnitts aufweist, der die Tiefe des Querschnitts vergrößert.

6. Struktur (1) nach einem der Ansprüche 1 bis 5, **dadurch gekennzeichnet, dass** die Struktur (1) außerdem für jeden der beiden Längsträger (3) ein im Falle eines hinteren Aufpralls verformbares Teil (25) umfasst, das in dem äußeren Profil (19) direkt gegenüber dem Kraftübertragungsprofil (23) untergebracht ist.

7. Struktur (1) nach Anspruch 6, **dadurch gekennzeichnet, dass** jedes der verformbaren Teile (25) eine U-Form mit einem in Längsrichtung ausgerichteten Steg (25.1) und zwei quer ausgerichteten Flügeln (25.2) aufweist.

8. Struktur (1) nach einem der Ansprüche 1 bis 7, **dadurch gekennzeichnet, dass** die Struktur (1) außerdem für jeden der beiden Längsträger (3) eine innere Schiene (27) umfasst, die im U-förmigen Querschnitt des äußeren Profils (19) so angeordnet ist, dass sie im Falle eines hinteren Aufpralls mindestens einen Teil der von dem entsprechenden Kraftübertragungsprofil (23) übertragenen Kräfte zurücknehmen kann.

9. Struktur (1) nach Anspruch 8, **dadurch gekennzeichnet, dass** jede der inneren Schienen (27) einen U-förmigen Querschnitt mit Laschen (27.1) aufweist, die an der Innenseite des Stegs (19.1) des U-förmigen Querschnitts des äußeren Profils (19) befestigt sind.

10. Struktur (1) nach einem der Ansprüche 6 und 7 und nach einem der Ansprüche 8 und 9, **dadurch gekennzeichnet, dass** jedes der verformbaren Teile (25) zwischen der inneren Schiene (27) und dem entsprechenden Kraftübertragungsprofil (23) angeordnet ist.

## Claims

1. A motor vehicle structure (1) with two side underside spars (3), each of said spars (3) comprising:
- an interior profile; and
- an outer profile (19), with a U-shaped cross section, extending from a middle foot (11) to a rear foot (13) and attached to the inner profile (21);
**characterized in that** the structure (1) further comprises, for each of the two longitudinal members (3):
- a force transmission profile (23) from the corresponding rear wheel in the event of a rear impact, said profile (23) being arranged at the rear foot (13) in the extension of the outer profile (19) and configured to enter the U-section of the outer profile (19) in the event of a rear impact.

2. Structure (1) according to claim 1, **characterized in that** the force-transmitting profile (23) has a U-shaped cross-section with an average width (f) which increases progressively from front to rear.

3. Structure (1) according to one of claims 1 and 2, **characterized in that** the force transmission profile (23) has a U-shaped cross-section facing the outer profile (19) of average width smaller than the average width (f) of the U-shaped cross-section of the said profile (23).

4. Structure (1) according to one of claims 1 to 3, **characterized in that** the force transmission profile (23) has openings (23.1) capable of promoting deformation of the profile (23) during the rear impact and thus absorbing a part of the said impact.

5. Structure (1) according to one of claims 1 to 4, **characterized in that** the force transmission profile (23) has a rear end facing a front face (17) for the passage of the corresponding rear wheel, the said profile (23) having at the said end a boss (23.3) on the web (23.2) of the U-shaped section, increasing the depth of the said section.

6. Structure (1) according to one of claims 1 to 5, **characterized in that** the said structure (1) further comprises, for each of the two longitudinal members (3), a deformable part (25) in the event of a rear impact housed in the outer profile (19) directly opposite the force transmission profile (23).

7. Structure (1) according to claim 6, **characterized in that** each of the deformable parts (25) has a U-shape with a longitudinally oriented web (25.1) and two transversely oriented flanges (25.2).

8. Structure (1) according to one of claims 1 to 7, **characterized in that** the said structure (1) further comprises, for each of the two longitudinal members (3), an internal rail (27) arranged in the U-shaped section of the outer profile (19) so as to be able to take up at least part of the forces transmitted by the corresponding force transmission profile (23) in the event of a rear impact.

9. Structure (1) according to claim 8, **characterized in that** each of the inner rails (27) has a U-shaped cross-section with lugs (27.1) fixed to the inner face of the web (19.1) of the U-shaped cross-section of the outer profile (19).

10. Structure (1) according to one of claims 6 and 7, and according to one of claims 8 and 9, **characterized in that** each of the deformable parts (25) is arranged between the internal rail (27) and the corresponding force transmission profile (23).
